# EUROPEAN PATENT SPECIFICATION

(11) **EP 0 630 564 B1**
(45) Date of publication and mention of the grant of the patent: **21.02.2001**
(21) Application number: 94202759.0
(22) Date of filing: 21.07.1988
(51) Int. Cl.: A01J 7/00

(54) **Implement for milking animals**
Gerät zum Melken von Tieren
Appareil pour la traite d'animaux

(30) Priority: 23.07.1987 NL 8701735
(43) Date of publication of application: 28.12.1994
(62) Divisional of application: 91202804.0
(73) Proprietor: MAASLAND N.V., 3155 PD Maasland (NL)
(72) Inventor: van den Berg, Karel, NL-2971 BR Bleskensgraaf (NL); Bom, Cornelis Johannes Gerardus, NL-3181 VC Rozenburg (NL)
(74) Representative: Corten, Maurice Jean F.M.

(56) References cited:
- EP-A- 0 091 892
- GB-A- 2 007 486
- US-A- 3 726 252
- US-A- 4 263 874

## Description

The present invention relates to an implement according to the preamble of claim 1.

Document EP-0 091 892 relates to an implement for milking animals comprising a robot arm capable of carrying teat cups and automatically connecting and re-applying teat cups to the teats of an animal. However, particularly during separately decoupling of the teat cups from the teats relatively strong fluctuations of the underpressure level in the milk conduct system will occur. In US-A-4,263,874 a shutoff valve assembly is described which shuts off the vacuum when milking is finished or when a premature disengagement of the teat cup assembly occurs. This device requires a magnet and an anvil to block the vacuum inside the milk line, which is intrusive to the milk flow and unhygienic. Also, the device has the disadvantage that it operates on all four teat cups at the same time. US-A-3,726,252 relates to a teat cup assembly which comprises an inflation connected to an inlet nipple. When the teat cup assembly is retracted, the inflation kinks over the inlet aperture of the nipple and shuts off vacuum to the inflation. This device has the disadvantage that the teat cups must be retracted completely in order to shut off the vacuum.

The object of the invention is to provide for an improved and efficient solution of these problems. Therefore, according to the invention, the implement as described in the opening paragraph is characterized by the features as defined in the characterizing part of claim 1. In said embodiment the lifting mechanism may comprise an operating cylinder which provides for the upward movement of a teat cup and the shutting off of the milk hose.

In order to exert the pressure to block the milking hose, a milk hose holder may be provided, mounted in the robot arm end position, through which milk hose holder a milk hose is passed, while the milk hose holder grips the milk hose at either side of the region whereover it is flattened.

In a further embodiment the robot arm end portion is slidable relative to the further part of the robot arm, while the blocking mechanism and the milk hose holder mounted in the robot arm end portion are located in the further part of the robot arm, at least when the robot arm parts, slidable relative to each other, are in the pushed-in-position.

For a better understanding of the invention and to show how the same may be carried into effect, an embodiment thereof will now be described with reference to the accompanying drawings, in which:
Figure 1 is a side view of a cow present in a milking parlour;
Figure 2 is, to an enlarged scale, a more detailed part of the side view according to Figure 1;
Figure 3 is a partial plan view taken in the direction of the arrow III in Figure 2;
Figure 4 is a cross-sectional view taken on the line IV-IV in Figure 2;
Figure 5 is a cross-sectional view in accordance with Figure 4, the robot arm being in the operational position;
Figure 6 is a horizontal cross-sectional view of part of the robot arm;
Figure 7 is a partially vertical cross-section through part of the robot arm;
Figure 8 is a cross-sectional view taken on the line VIII-VIII in Figure 7, and
Figure 9 is a partial cross-sectional view taken on the line IX-IX in Figure 6.

In the various drawings, the embodiment is shown only schematically.

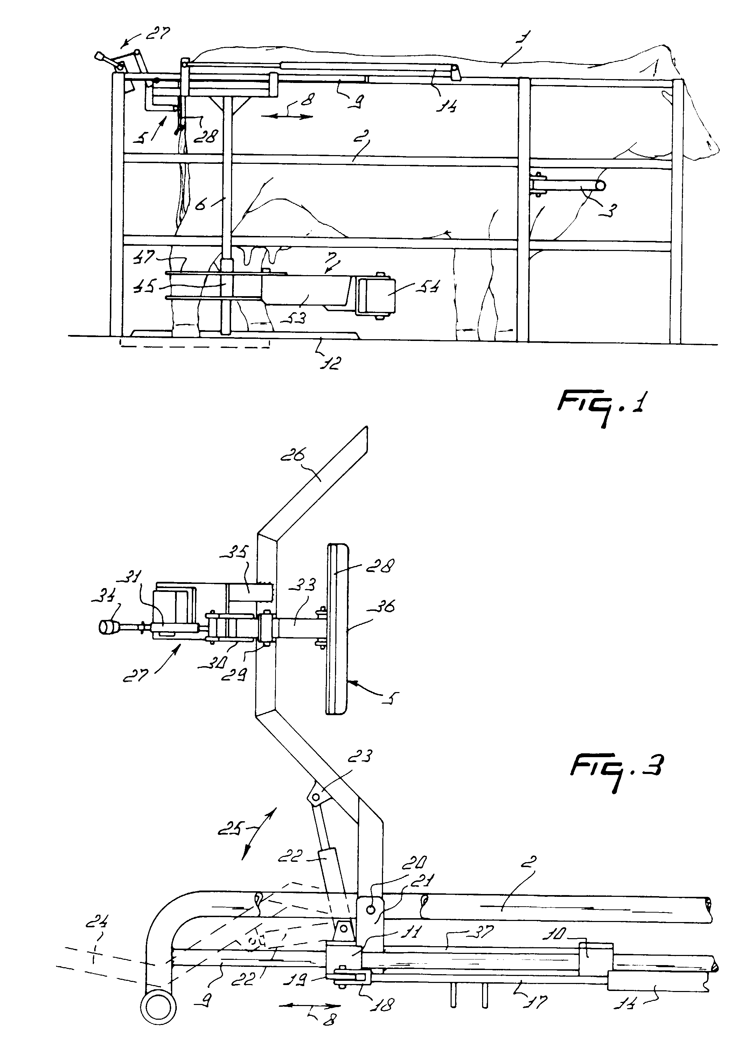

In the side view of the implement of Figure 1 there is shown a cow 1 which is present in the milking parlour, the milking parlour being enclosed by a railing 2 which limits the freedom of movement of the animal 1 in a lateral direction. The milking parlour is entered by the animal from the rear, while a pivotal stop 3 is arranged near the front side, which stop 3 constitutes a boundary for the animal 1 in the forward direction. By providing the front side of the milking parlour with e.g. a feed unit, the animal will advance sufficiently far, i.e. until against the stop 3.

The milking parlour floor has a recess 4, which is arranged such that the animal will not put her hind feet thereon, e.g. because its bottom extends obliquely inwardly and downwardly, so that the hind legs of the animal are wide apart and on either side of the recess 4. The recess 4 may have a drain for discharging the animal's excrements, if any.

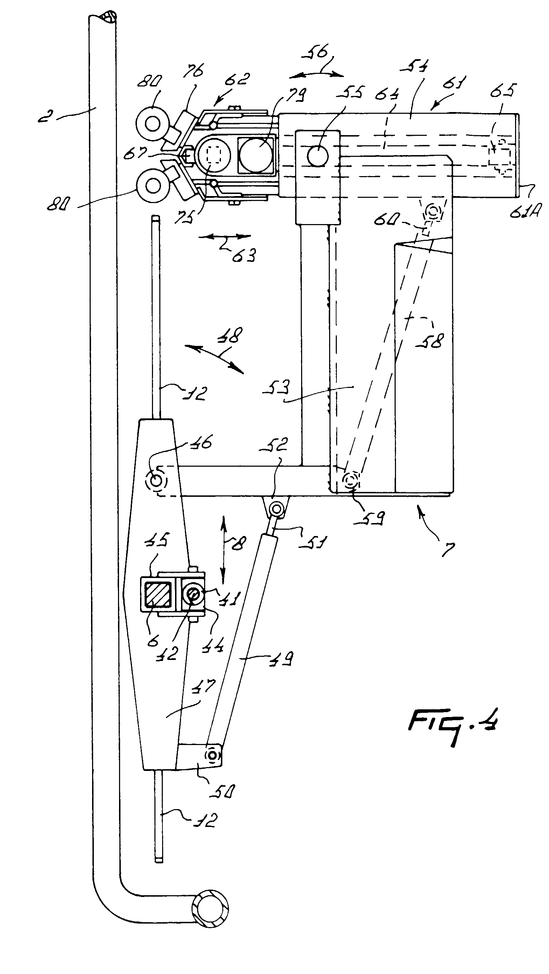

Once the animal has entered the milking parlour, a sensor device 5 is pivoted against her rear side, as will be described in further detail with reference to Figure 3. At the side of the milking parlour there is arranged a substantially vertical frame beam 6, which frame beam 6 at its upper end is provided with a longitudinal guide means and to which near its lower end a robot arm 7 is fitted, as will be set out in further detail hereinafter.

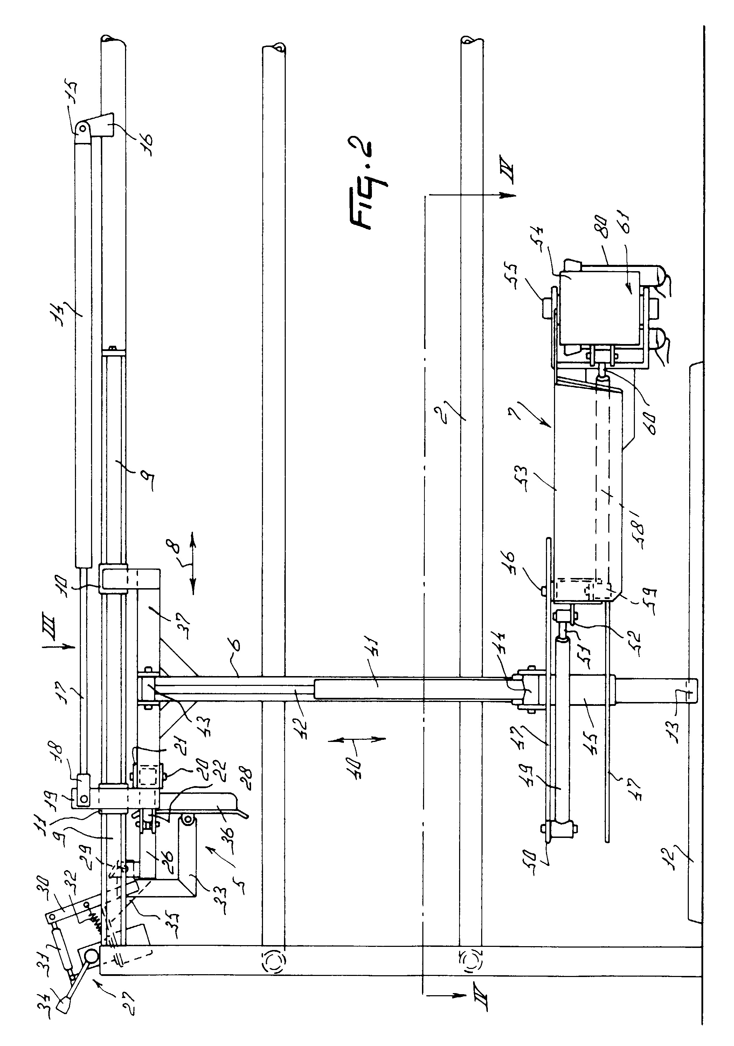

Figure 2 shows in greater detail the features shown roughly in Figure 1. Figure 2 shows part of the railing 2, while there is indicated how the vertical frame beam 6 is capable of moving with respect to the milking parlour in the longitudinal direction as denoted by the arrows 8. For that purpose, the railing 2 is provided with a guide rod 9 along which can move two interconnected slide blocks 10, 11, the said slide blocks 10, 11 being interconnected by means of a horizontal frame beam 37 secured to the vertical frame beam 6. Near the floor, the frame beam 6 is guided by guide rail 12, along which the lower portion 13 of frame beam 6 slides. This sliding movement in the longitudinal direction of the frame beams 6 and 37 is effected by means of an operating cylinder 14, the end 15 of which is connected to the railing 2 via a support 16 and the piston rod 17 of which is connected to a support 19 attached to the frame beam 37. It will be obvious that by operating the cylinder 14, which can be done both pneumatically and hydraulically, there is effected a shift of the frame beams 6 and 37 in the longitudinal direction.

The frame beam 37 is furthermore provided with a sensor device 5, which sensor device 5 is shown in plan view in Figure 3.

As is shown in Figure 3, the sensor device 5 is connected pivotably about a pivot pin 20 to a support 21, which support 21 is attached to the frame beam 37. The pivotal movement of the sensor device 5 is effected by means of an operating cylinder 22, one end of which is connected to the frame beam 37 and the other end to a support 23 of the sensor device 5. In the position shown in Figure 3, the sensor device 5 is in the operative position, whilst broken lines 24 indicate the position of the sensor device when the animal enters the milking parlour. The pivotal movement of the sensor device 5 is indicated by means of arrows 25.

The sensor device 5 is fitted with a bent frame 26 which constitutes the rear fence of the milking parlour. The frame 26 comprises control means 27 to which is connected a sensor 28, which sensor 28 is adapted to bear against the rear side of the animal. The sensor 28 including a cushion 36 is connected pivotably about a horizontal pivot pin 29 (see Figure 2) to the frame 26 and is furthermore provided with a lever 30 that is connected to the control mechanism 27 via an adjustable intermediate shaft 31. There is also provided a spring 32, which spring 32 keeps an arm 33 to which the sensor 28 is connected in the position as shown.

The control mechanism 27 operates the operating cylinder 14 such that the piston rod 17 is displaced therein, i.e. the frame beams 6 and 37 in Figure 2 move to the right, until the sensor 28 comes to bear against the rear side of an animal, while the arm 33, the lever 30 and the intermediate shaft 31 tilt in such a manner that the control mechanism 27 fixes the operating cylinder 14. When the animal moves somewhat to the rear, thereby causing the sensor device 5 (Figure 2) to be moved to the left and the tilt of the arm 33, the lever 30 and the intermediate shaft 31 to be increased still further, the control mechanism 27 operates the operating cylinder 14 in such a manner that the piston rod 17 moves to the left, as a result of which the frame beams 6 and 37 move along with the animal to the left. It will be obvious that thus the control mechanism 27 so controls the operating cylinder 14 that the frame beams 6 and 37 always remain approximately in the same position relative to the animal in the longitudinal direction. The control mechanism 27 includes a handle 34 by means of which, optionally, the displacement of the frame beams can be effected by hand. Optionally, the pressure of sensor 28 against the rear side of the animal can be adjusted to any desired pressure. As is apparent from Figure 3, the control mechanism 27 is fitted to the frame 26 by means of a support 35.

A robot arm 7 (Figure 2) is connected slidably in height (arrows 40) to the frame beam 6. The sliding movement in height is effected by means of an operating cylinder 41 having a piston rod 42, the one end 43 of which is connected to the frame beams 6 and 37 in the place where the said frame beams are interconnected. The other end 44 of the operating cylinder 41 is connected to a slide block 45 which is capable of moving in height along the frame beam 6 in dependence on the operation of the operating cylinder 41.

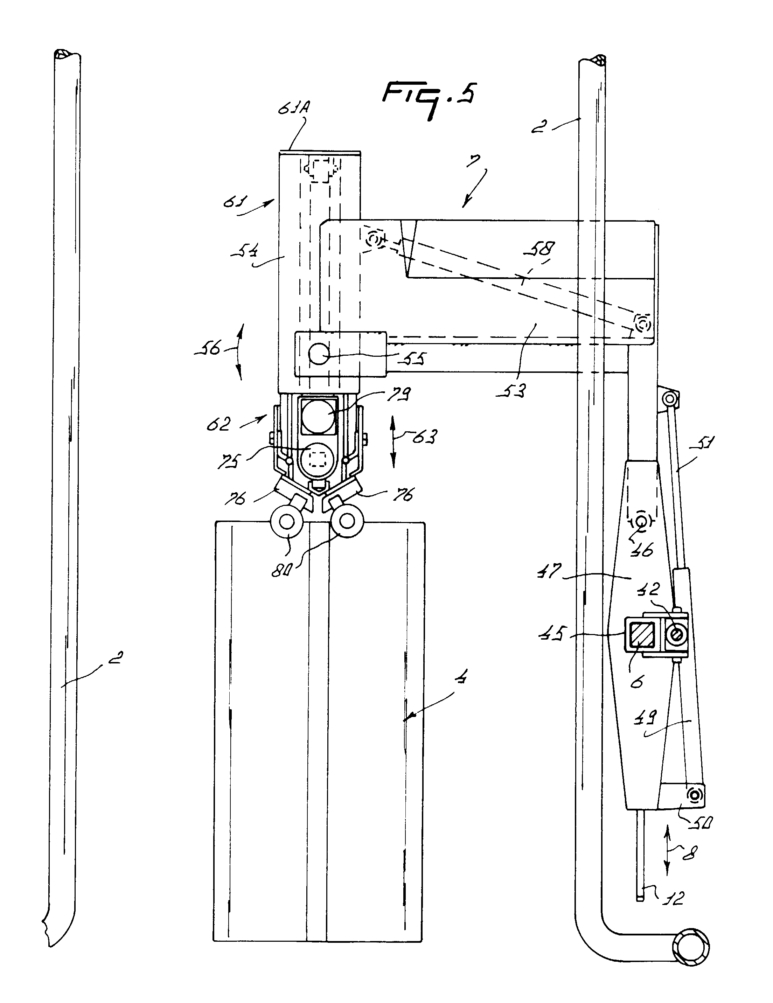

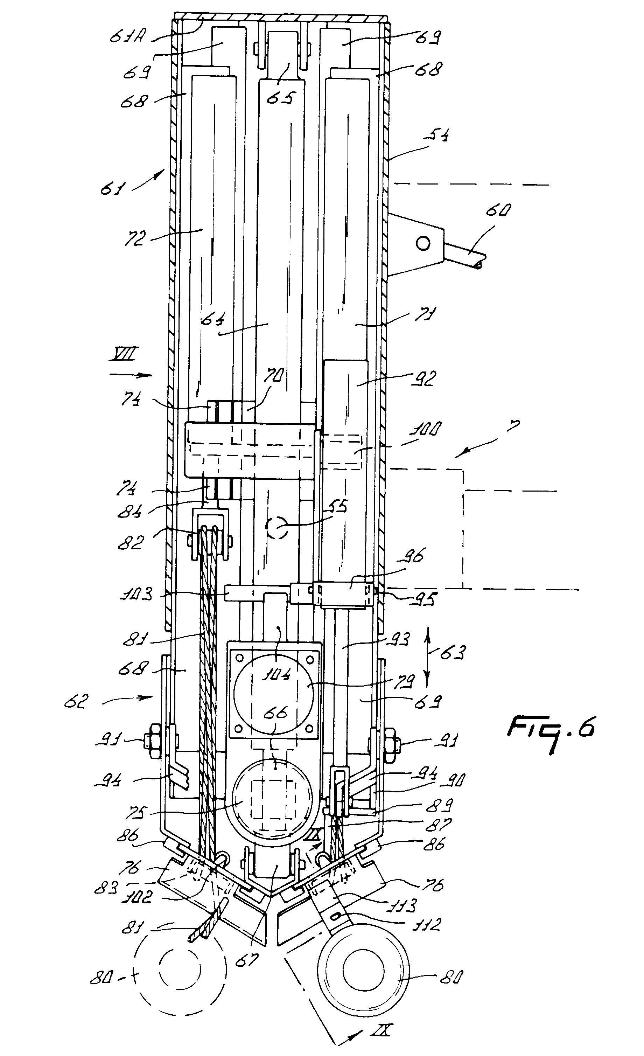

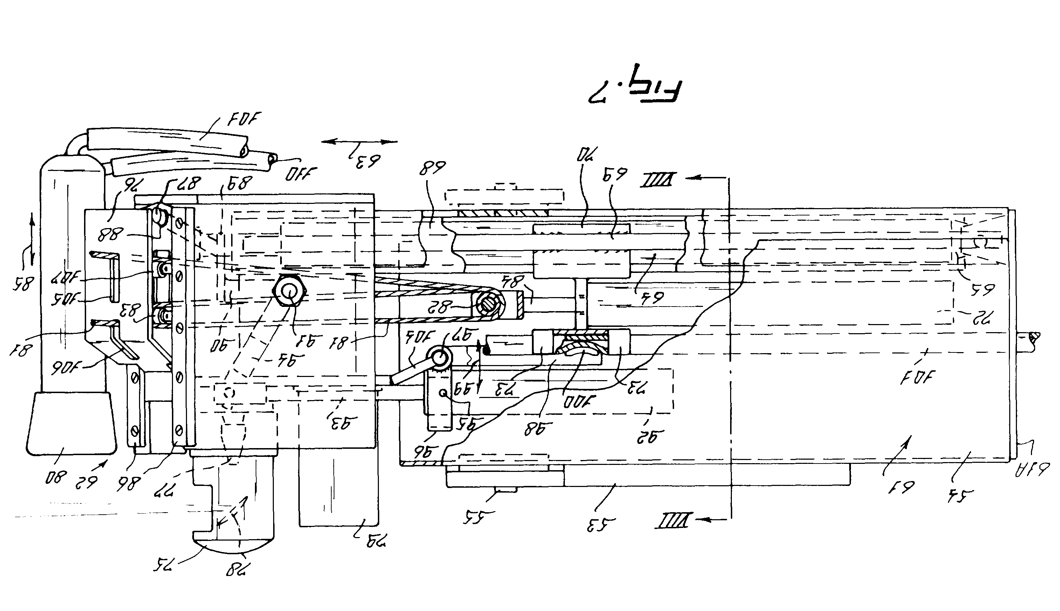

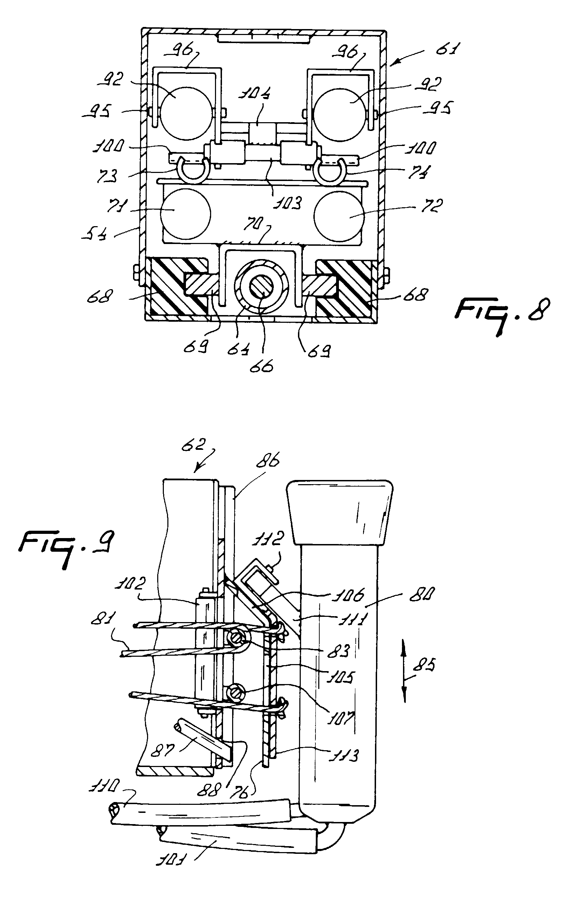

The robot arm 7 is shown in greater detail in Figure 4 (rest position) and Figure 5 (operational position). The robot arm 7 is connected capable of pivoting about a substantially vertical pivot pin 46 to a frame 47 which is attached to the slide block 45. This pivotal movement, which is indicated by arrows 48, is effected by means of an operating cylinder 49 which has one end connected to a support 50 of the frame 47. The piston rod 51 of the cylinder 49 is connected to a support 52 which is attached to the first position 53 of the robot arm 7. It will be obvious that, by operating the operating cylinder 49, the robot arm 7 can be pivoted from the rest position (Figure 4) to the operational position (Figure 5) and vice versa. It may be of importance for the robot arm 7 to be fixed under spring load, i.e. in such a manner that it can deflect when e.g. the animal kicks against it. In this embodiment, this can be achieved by constructing the operating cylinder 49 such that it can spring e.g. by a pneumatic means.

The robot arm 7 consists of a first portion 53 and a second portion 54 which is connected capable of pivoting about a pivot pin 55 to the said first portion 53. The pivotal movement about the pivot pin 55 is indicated by arrows 56 and is effected by means of a cylinder 58 whose end 59 is attached to the first portion 53 of the robot arm 7 and whose piston rod 60 is connected to the second portion 54 of the robot arm 7. As is apparent from Figures 4 and 5, by means of the operating cylinder 49, the robot arm 7 can be moved to under the animal present in the milking parlour, the pivot pin 55 being in a central position under the animal, i.e. between the animal's legs. Thereafter, by operating the operating cylinder 58, the second portion 54 of the robot arm 7 can be pivoted about the pivot pin 55 at a desired angle.

The second portion 54 of the robot arm 7, further details of which are shown in Figures 6, 7, 8 and 9, consists of a portion 61 which is connected pivotably to the first portion 53 of the robot arm 7 and a portion 62 which is axially movable relative to the portion 61, as is indicated by the arrows 63.

The portion 61 is of a substantially hollow construction, so that, in the inserted condition, the portion 62 is partly within the portion 61. Between the mutually slidable portions 61 and 62 there is arranged an operating cylinder 64, the end 65 of which is connected to the portion 61 of the second portion 54 of the robot arm 7. The piston rod 66 of the operating cylinder 64 has its end 67 connected to the portion 62 of the second portion 54 of the robot arm 7. The portions 61 and 62 are provided with guide means 68 and 69 which slidably engage each other and of which the guide means 68 is connected to the portion 61 and the guide means 69 to the portion 62 (see also Figure 8).

As is apparent from Figure 8, a set of guide means 68, 69 extends on either side of the second portion 54 of robot arm 7, the guide means 69 being interconnected by a U-shaped frame portion 70 to which furthermore are connected two operating cylinders 71 and 72 and two milk hose holders 73, 74. Their mode of operation will be described in greater detail hereinafter.

Near the ends of the guide means 69 that are shown at the right-hand side in Figure 7, the said guide means are also interconnected and support a number of component parts which can slide along with the guide means 69 relative to the further portions of the robot arm 7. These component parts are the detection means 75, the teat cup carriers 76 and the control means therefor.

In this embodiment, the detection means 75 consist in an ultrasonic sensor 77 capable of transmitting an ultrasonic signal in the upward direction, which signal is received after reflection, whereafter the distance to the reflecting object can be calculated, whilst the location of this object can be determined on the basis of the data as to the direction of the transmitted signal. The ultrasonic signal is transmitted upwardly by the sensor 77, whereafter it is reflected in an approximately horizontal direction by a somewhat concave reflector 78. The use of this concave reflector 78 achieves a more directional signal having e.g. a divergence of approximately 4°. The reflector 78 can be turned about a substantially vertical axis by means of an operating motor 79, so that it can perform both a rotational movement and a reciprocating (swinging) one. By performing this movement, a disc-shaped portion of the space, which approximates a plane, can be scanned for the presence of objects. The said plane may be a flat plane located perpendicularly to the rotational axis of the reflector 78, but also a conical plane having this axis as its axis of symmetry.

It will be obvious that the detection means 75 can establish the position of one or more teats of the animal's udder when the robot arm 7 is at the appropriate level. The detected position of the teat or teats is the position relative to the end of the robot arm 7, so that therefrom it can be derived directly what movements the operating cylinders 58 and 64 must perform in order to position a teat cup 80 under the relevant teat. During and directly after the end of the robot arm 7 has been moved, the detection means 75 can always track the position of the relevant teat, so that the relevant teat cup 80 is positioned, and remains so, under the teat to which it must be connected. The ultrasonic sensor transmits and receives a signal e.g. sixty times per second, so that it can always be checked whether the teat is already in the proper position relative to the robot arm 7. The use of this mode of direct control enables a very simple and hence cheap robot arm control.

A plurality of teat cups 80 can be arranged to the robot arm 7, but in principle these teat cups are not connected simultaneously to the relevant teats. Once a teat cup 80 has been moved in the above-described manner to under the teat to which it must be connected, it is moved upwardly and a vacuum is produced therewithin, so that the teat cup sucks to the teat. Thereafter the teat cup 80 is released from the robot arm 7, so that this robot arm 7 can move with the object of positioning a subsequent teat cup in the desired place. The following technical means are provided for performing the actions described in the foregoing.

At the end of the robot arm 7 there is/are provided one or more teat cup carriers 76, each of which can carry a teat cup 80. The teat cup 80 is pulled against the teat cup carrier 76 by means of a flexible connecting member in the form of a cord 81. In the embodiment shown, the two ends of cord 81 are connected to the teat cup 80, whilst from its end the cord is passed around a roller 82 and wrapped around a roller 83. The roller 83 is arranged in the slidable portion 62 of the robot arm 7, as is also the above-mentioned operating cylinder 72, whilst the roller 82 is arranged at the end of piston rod 84 of cylinder 72. It will be obvious that, when the piston rod 84 is retracted in the cylinder 72, this has as a result that the ends of cord 81 are tightened, so that the teat cup 80 connected thereto is clamped against the teat cup carrier 76. However, when the operating cylinder 72 is operated in such a way that the piston rod 84 moves therefrom, then the teat cup 80 is no longer clamped against the teat cup carrier 76 and it can move freely relative to the robot arm 7 and be connected to a teat of the udder. At any desired moment, e.g. when the milking procedure has ended or when for any other reason the teat cup is not connected to the teat, the teat cup 80 can be pulled against the teat cup carrier 76 again by operating the operating cylinder 72. Since the teat cup 80 is connected to the cord 81 in two places, it will always be kept in the proper position against the teat cup carrier 76.

As is shown in Figure 7 by means of arrows 85, the teat cup carrier 76 together with the teat cup 80 is adapted to slide upwardly, the teat cup carrier 76 sliding in guide means 86. The upward movement is effected by a rod 87 which extends through an aperture 88 into the teat cup carrier 76 and by means of its other end is pivotal about a pivot pin 91 via the portions 89 and 90 (indicated in Figure 7 by means of broken lines). Owing to the pivotal movement of the rod 87 about the pivot pin 91, the teat cup carrier 76 is moved in the vertical direction in the guide means 86, thereby imparting an upward movement to the teat cup 80.

This upward movement is effected by means of an operating cylinder 92 wherein a piston rod 93 can move axially, so that a lever 94 fitted to the end of the piston rod 93 pivots about the pivot pin 91 together with the rod 87. In this situation, the operating cylinder 92 is connected pivotably about a horizontal pivot pin 95 in a tilting member 96, the tilting member 96 being capable of pivoting about a pivotal axis 97 that is secured rigidly relative to the slidable portion 62 of the robot arm 7. A closing lever 98 which can perform the pivotal movement denoted by the arrows 99 is secured rigidly to the tilting member 96 and hence is pivotal about the pivotal axis 97. Near its end, the closing lever 98 is provided with a pressure member 100 which, as is shown in Figure 7, can flatten a milk hose 101 so as to block same. To that end, the milk hose 101 is passed through the milk hose holder 73 which grips the milk hose at either side of the region whereover it is flattened.

As has been described in the foregoing and shown in Figure 7, the operating cylinder 92 has two functions, i.e. the upward movement of teat cup carrier 76 and the blocking of the milk hose 101. In this connection, the milk hose 101 is always in the blocked condition as long as the teat cup carrier 76 is kept in the lowermost position, while the flattening of the milk hose 101 is terminated as soon as the teat cup carrier 76 moves upwardly. The above-described control mechanism is provided for each teat cup carrier 76, the present embodiment having two carriers 76.

Figure 6 furthermore shows how the cord 81 is guided by means of substantially vertically arranged guide rollers 102, and how a pin 103 is connected by means of plate 104 to the slidable portion 62 of the robot arm 7 so as to form the pivotal axis 97.

Figure 7 furthermore shows that the teat cup carrier 76 is provided with recessed portions 105 and 106 through which the cord 81 is passed, which recessed portions 105, 106 extend in the vertical direction, so that the cord 81 has some freedom of movement relative to the teat cup carrier 76. Furthermore a roller 107 is fitted to the teat cup carrier 76 below the roller 83, which two rollers ensure a proper guiding of the cord 81.

Figure 9 shows the teat cup carrier 76 and the teat cup 80 in greater detail. The teat cup 80 includes the milk hose 101 and a pulsating hose 110, the two of which are connected with the required clearance to the robot arm 7, and the milk hose 110 being connected in the above-described manner to milk hose holder 73. The teat cup 80 is furthermore provided with a connection arm 111 that is arranged pivotably about a pin 112 to connection member 113. The connection member 113 is connected to the ends of the cord 81, so that this connection member 113 is pulled up against the teat cup carrier 76. It will be obvious that the teat cup 80 has some freedom of movement about the pin 112; optionally, this freedom of movement may be limited by applying spring-loaded means to keep the teat cup 80 in an approximately vertical position. The extension of the pin 112 passes through the centre of the aperture of the teat cup 80, so that, when pivoted upwardly, this aperture approximately maintains its position.

The illustrated embodiment of the implement for milking an animal operates as follows.

After an animal has entered the milking parlour and has walked on until a further forward movement is limited by the means appropriate thereto, e.g. a stop and/or a feeding arrangement, the sensor device 5 is pivoted through approximately 90° by means of the operating cylinder 22, whereafter the sensor device 5 moves towards the animal until the sensor 28 bears against its rear side and continues to bear thereon by means of control means 27, so that the frame 6, 12 carrying the robot arm 7 always remains in approximately the same position relative to the animal.

By means of an animal recognition system (not shown in the drawings), it is established which animal is present in the milking parlour and, by means of a data processing arrangement (computer) (not shown either in the drawings), further details about the relevant animal are known. For example, it is known how much time has elapsed since the animal was milked last, so that the shape of the udder, which partly depends on the quantity of milk contained therein, is roughly known. On the basis of this information the robot arm 7 can be brought by means of the operating cylinder 41 at a desired level, which level serves as the starting height for the search of the teats of the udder. Thereafter, by means of the operating cylinder 49, the robot arm 7 is pivoted through approximately 90°, so that the second portion 54 of the robot arm 7 is located under the animal. During this pivotal movement of the robot arm 7 to under the animal, the frame beams 6 and 37 can be displaced additionally by the operating cylinder 14 so as to prevent the animal from being contacted by the robot arm 7 during pivoting. On the basis of the afore-mentioned information, the end of robot arm 7, too, can be adjusted to the desired starting position by means of the operating cylinders 58 and 64, whereafter by means of the detection means 75 a region is scanned so as to check whether one or more teats are located therein. In case nothing is found, the robot arm 7 is moved slightly upwardly by means of the operating cylinder 41 and a further check is made in search of the presence of one or more teats. As soon as in this manner has/have been detected one or more teats, whose position(s) approximately corresponds/correspond to the data known of the relevant animal, the detection means concentrate on one teat only in order to move the relevant teat cup to under that teat and to move it upwardly thereafter, as has been described already in the foregoing. These actions are repeated until all the teat cups have been applied.

In the embodiment shown, the robot arm 7 supports two teat cups 80. However, it is alternatively possible, with the object of applying e.g. four teat cups on a cow, to provide the end of the robot arm 7 with four teat cup carriers which are otherwise operable in the above-described manner. Alternatively, it is possible to provide not all the teats of the udder with a teat cup by means of the described robot arm, the remaining teat cups being applied from a different direction, e.g. from the rear side.

In addition, the required number of sensors can be present for detecting and checking the various actions, such as detecting whether a teat cup has been applied in the correct manner or has not been applied, whereafter the relevant teat cup can be returned by means of cord 81 to the starting position for a renewed application.

## Claims

1. Implement for milking animals, such as cows, comprising a milking parlour and a robot arm (7) capable of carrying teat cups (80) which can automatically be connected to the teats of an animal, and which robot arm can be turned from outside the milking parlour to under the animal's udder and be positioned therebelow by means of a sensor for establishing the position of the teats, characterized in that the implement is provided with means (87 - 97) for individually moving upwardly said teat cups (80) relative to the robot arm (7), the teat cups (80) being releasable from the robot arm (7), so that, when a vacuum is produced in a teat cup (80), the said teat cup (80) can suck to a relevant teat and be released from the robot arm (7), the implement further comprising a flexible connecting member (81), forming a flexible connection between the robot arm (7) and a teat cup (80) during milking and being capable of pulling said teat cup (80) towards and against the robot arm (7) when the milking flow through said teat cup (80) has ended, while furthermore a blocking mechanism (98, 100) is provided with a pressure member (100) by means of which the milk hose (101) of a teat cup (80) can be shut off, the pressure member (100) being operated by a lever (98) coupled to a lifting mechanism (87, 92 - 94) of a teat cup (80).

2. Implement as claimed in claim 1, characterized in that the lifting mechanism (87, 92 - 94) comprises an operating cylinder (92) which provides for the upward movement of a teat cup (80) and the shutting off of the milk hose (101).

3. Implement as claimed in one of the preceding claims, characterized in that a milk hose holder (73, 74) is provided, mounted in the robot arm end portion (62), through which milk hose holder (73, 74) a milk hose (101) is passed, and the milk hose holder (73, 74) grips the milk hose at either side of the region whereover it is flattened.

4. Implement as claimed in any one of the preceding claims, characterized in that the robot arm end portion (62) is slidable relative to the further part of the robot arm (7), while the blocking mechanism (98, 100) and the milk hose holder (73, 74), mounted in the robot arm end portion (62) are located in the further part of the robot arm (7), at least when the robot arm parts, slidable relative to each other, are in the pushed-in-position.

## Revendications

1. Installation de traite d'animaux, tels que des vaches, comportant un box de traite et un bras de robot (7) pouvant porter des gobelets trayeurs (80) qui peuvent être connectés automatiquement aux trayons d'un animal, et lequel bras de robot peut être tourné à partir de l'extérieur du box de traite jusque sous le pis de l'animal, et être positionné sous celui-ci par l'intermédiaire d'un capteur destiné à établir la position des trayons, caractérisée en ce que l'installation est munie de moyens (87 à 97) pour déplacer individuellement vers le haut lesdits gobelets trayeurs (80) par rapport au bras de robot (7), les gobelets trayeurs (80) pouvant être libérés du bras de robot (7), de sorte que, lorsqu'un vide est produit dans un gobelet trayeur (80), ledit gobelet trayeur (80) peut aspirer un trayon concerné et être libéré du bras de robot (7), l'installation comportant de plus un élément de liaison souple (81), formant une connexion souple entre le bras de robot (7) et un gobelet trayeur (80) lors de la traite, et pouvant tirer ledit gobelet trayeur (80) vers le bras de robot (7) et contre celui-ci lorsque l'écoulement de traite à travers ledit gobelet trayeur (80) est terminé, tandis qu'en outre un mécanisme de blocage (98, 100) est muni d'un élément de pression (100) par l'intermédiaire duquel le tuyau à lait (101) d'un gobelet trayeur (80) peut être serré, l'élément de pression (100) étant actionné par un levier (98) accouplé à un mécanisme de levage (87, 92 à 94) d'un gobelet trayeur (80).

2. Installation selon la revendication 1, caractérisée en ce que le mécanisme de levage (87, 92 à 94) comporte un vérin d'actionnement (92) qui fournit le déplacement vers le haut d'un gobelet trayeur (80) et le serrage du tuyau à lait (101).

3. Installation selon l'une quelconque des revendications précédentes, caractérisée en ce qu'un dispositif de maintien de tuyau à lait (73, 74) est fourni, monté dans la partie d'extrémité de bras de robot (62), dispositif de maintien de tuyau à lait (73, 74) à travers lequel est passé un tuyau à lait (101), et le dispositif de maintien de tuyau à lait (73, 74) saisit le tuyau à lait de chaque côté de la zone où il est aplati.

4. Installation selon l'une quelconque des revendications précédentes, caractérisée en ce que la partie d'extrémité de bras de robot (62) peut coulisser par rapport à la partie supplémentaire du bras de robot (7) tandis que le mécanisme de blocage (98, 100) et le dispositif de maintien de tuyau à lait (73, 74), montés dans la partie d'extrémité du bras de robot (62), sont positionnés dans la partie supplémentaire du bras de robot (7) au moins lorsque les parties de bras de robot, pouvant coulisser les unes par rapport aux autres, sont dans la position enfoncée.

## Patentansprüche

1. Vorrichtung zum Melken von Tieren, wie z. B. Kühen, mit einem Melkstand und einem Roboterarm (7), der geeignet ist, Zitzenbecher (80) zu tragen, die automatisch an die Zitzen eines Tieres anschließbar sind, wobei der Roboterarm von einer Position außerhalb des Melkstandes unter das Euter des Tieres drehbar und mit Hilfe eines Sensors zum Ermitteln der Position der Zitzen unter dem Euter positionierbar ist,
dadurch gekennzeichnet, daß die Vorrichtung Mittel (87 bis 97) aufweist, um die Zitzenbecher (80) relativ zu dem Roboterarm (7) einzeln nach oben zu bewegen, wobei die Zitzenbecher (80) von dem Roboterarm (7) lösbar sind, so daß sich bei Erzeugen eines Vakuums in einem Zitzenbecher (80) der Zitzenbecher (80) an einer entsprechenden Zitze festsaugen und von dem Roboterarm (7) lösen kann, wobei die Vorrichtung ferner ein flexibles Verbindungsglied (81) aufweist, das eine flexible Verbindung zwischen dem Roboterarm (7) und einem Zitzenbecher (80) während des Melkens herstellt und geeignet ist, den Zitzenbecher (80) in Richtung auf und gegen den Roboterarm (7) zu ziehen, wenn der Milchfluß durch den Zitzenbecher (80) versiegt ist, wobei ferner eine Blockiervorrichtung (98, 100) mit einem Druckstück (100) versehen ist, mittels dessen der Milchschlauch (101) eines Zitzenbechers (80) verschlossen werden kann, wobei das Druckstück (100) von einem Hebel (98) betätigt wird, der mit einer Hubvorrichtung (87, 92 bis 94) eines Zitzenbechers (80) verbunden ist.

2. Vorrichtung nach Anspruch 1,
dadurch gekennzeichnet, daß die Hubvorrichtung (87, 92 bis 94) einen Arbeitszylinder (92) umfaßt, der bewirkt, daß ein Zitzenbecher (80) nach oben bewegt und der Milchschlauch (101) verschlossen wird.

3. Vorrichtung nach einem der vorhergehenden Ansprüche,
dadurch gekennzeichnet, daß ein Milchschlauch-Halter (73, 74) vorhanden ist, der in dem Roboterarm-Endteil (62) angeordnet ist, wobei ein Milchschlauch (101) durch den Milchschlauch-Halter (73, 74) hindurchgeführt ist und der Milchschlauch-Halter (73, 74) den Milchschlauch beiderseits des Bereiches umgreift, in welchem er abgeflacht ist.

4. Vorrichtung nach einem der vorhergehenden Ansprüche,
dadurch gekennzeichnet, daß der Roboterarm-Endteil (62) relativ zu dem weiteren Teil des Roboterarmes (7) verschiebbar ist, wobei die Blockiervorrichtung (98, 100) und der Milchschlauch-Halter (73, 74), die in dem Roboterarm-Endteil (62) angebracht sind, in dem weiteren Teil des Roboterarmes (7) angeordnet sind, zumindest wenn sich die relativ zueinander verschiebbaren Roboterarmteile in der eingeschobenen Position befinden.
